# EUROPEAN PATENT SPECIFICATION

(11) **EP 0 772 401 B1**
(45) Date of publication and mention of the grant of the patent: **04.11.1998**
(21) Application number: 95924433.6
(22) Date of filing: 10.07.1995
(51) Int. Cl.: A22C 11/10

(54) **APPARATUS AND METHOD FOR CRIMPING SAUSAGE LINKS AND ENDS**
VERFAHREN UND VORRICHTUNG ZUM GLIEDERN VON WURSTABSCHNITTEN
PROCEDE ET APPAREIL POUR LIGATURER DES CHAPELETS ET DES EXTREMITES DE SAUCISSES

(30) Priority: 26.07.1994 GB 9415027
(43) Date of publication of application: 14.05.1997
(73) Proprietor: Devro Plc, Glasgow G69 0JE (GB)
(72) Inventor: LYNCH, Tom Sadler, Glasgow G71 5LA (GB); HANLON, Allan James, Bridge of Allan, Stirlingshire FK9 4RQ (GB)
(74) Representative: Naismith, Robert Stewart
(86) International application number: GB9501615
(87) International publication number: WO9603050

(56) References cited:
- EP-A- 0 069 544
- EP-A- 0 139 333
- DE-A- 2 550 042
- GB-A- 2 147 189
- US-A- 1 564 588
- US-A- 3 487 500

## Description

The present invention relates to apparatus and method for forming links in a tubular casing filled with sausage meat, or sausage type food emulsion, or for forming end closures on individual sausages produced from such a filled casing.

Sausages are generally produced by crimping and twisting or cutting a tubular casing filled with sausage meat. The filled casing may be provided either by extruding the casing with emulsion or by filling a preformed casing with emulsion.

Individual sausages may be formed using a method and apparatus such as described in European Patent Nos. 69544 and 139333. In the disclosed apparatus, a number of crimping and cutting devices are radially mounted on a circular plate which is rotated around a stationary shaft. An elongate filled sausage casing is fed onto the apparatus and is received by each crimping and cutting device through a passageway defined by a pair crimping arms. The crimping and cutting devices are operated in sequence to close respective pairs of crimping arms to crimp and then cut the filled casing.

If it is desired to form a chain of coupled sausages it is preferable that, rather than severing the crimped links between adjacent sausages, adjacent sausages be rotated about their longitudinal axis relative to one another to form twisted casing portions between the sausages and thus to better maintain the integrity of the individual links. An apparatus and method for forming such twisted links is disclosed in International application no. PCT/GB94/000794. An apparatus according to the preambles of Claims 1 and 2 is known from US-A-1564588.

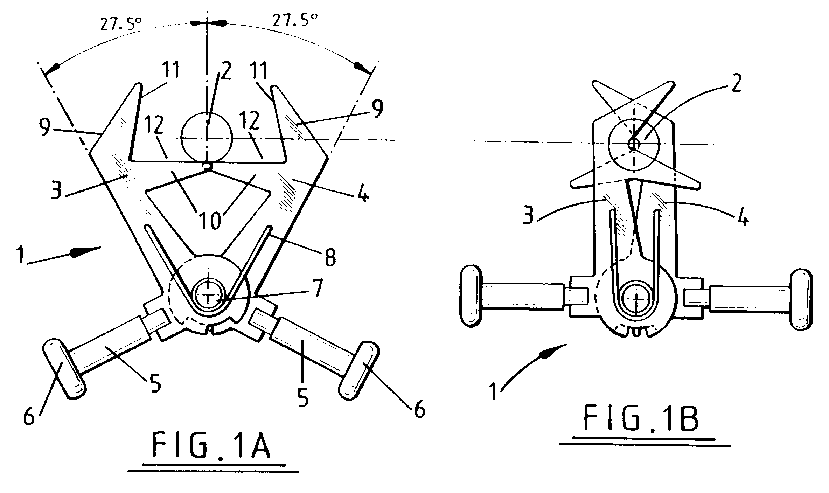

Figure 1a shows a crimping device 1 of the type described in the above referenced prior art. The stuffed casing 2, shown in cross-section in Figure 1a, travels around a circular path along which a number of such crimping devices are arranged. The crimping device comprises a pair of arms 3,4 each of which is provided with an outer finger 9 and an inner finger 10, the fingers forming a 'V' shape with the apex of the 'V' coinciding with the arms. The two arms are pivotally coupled together about a common axis of rotation 7 by means of a spring 8.

Each arm is provided with a cam follower 5 having an end mounted roller 6 which engages a cam fixed to a central shaft of the apparatus. The action of cams (not shown) on the cam followers causes the arms to rotate about axis 7 towards each other to close, compressing the filled casing between the outer surfaces 12 of the inner fingers 10 and the inner surfaces 11 of the outer fingers 9. Figure 1b illustrates the arms 3, 4 in the closed position.

The circular path along which the stuffed casing travels remains of substantially constant length during the crimping process. As the ends of the casing are substantially fixed where the casing enters and exits the apparatus, a link can only be formed by stretching the casing when it is crimped, around the shoulder of the sausage as the shoulder forms. This stretching produces considerable strain on the casing and can cause it to rupture. Whilst it may be possible to alleviate this problem by using thicker and stronger casings, this is not always acceptable especially if the casing is intended to be edible.

It is an object of the present invention to provide an apparatus and method for producing individual sausage links or sausage end closures which does not produce an unacceptable strain on the casing during the formation of sausage links and which does not impose significant restrictions on the type of casing which can be used.

According to a first aspect of the present invention there is provided apparatus for crimping an elongate filled sausage casing, the apparatus comprising;
at least two spaced apart crimping devices, each crimping device having a plurality of crimping surfaces which in a first position define a passageway through each of the crimping devices for receiving and supporting said filled casing; and
actuation means coupled to each of said crimping devices for substantially simultaneously actuating selected crimping devices to close two adjacent ones of the passageways about said filled casing to form a pair of adjacent crimps defining a sausage link between said pair of crimps and for moving said two passageways closer together as said passageways are closed.

According to a second aspect of the present invention there is provided apparatus for crimping an elongate filled sausage casing, the apparatus comprising;
means defining a substantially circular path along which a filled sausage casing is arranged to travel;
a plurality of crimping devices arranged at intervals around said circular path, each crimping device having a plurality of crimping surfaces which in a first position define a passageway through the crimping device for receiving and supporting said a filled casing; and
actuation means coupled to each of said crimping devices for substantially simultaneously actuating said crimping devices to close at least two adjacent passageways about said received filled casing to form a pair of adjacent crimps, the actuation means also being arranged to displace the said passageways of said at least two adjacent crimping devices in a radially inward direction whereby as the sausage casing is being crimped it is shortened axially from its originally supported length.

Each crimping device of the present invention may be provided by a pair of crimping arms coupled for rotation about a common axis of rotation in a scissor-like arrangement. The arms may each be provided at their radially outer end with a pair of fingers which substantially define a V shape, the two pairs of fingers being arranged to clamp a filled casing therebetween as the arms are closed. Preferably, the radially innermost fingers of the two arms partially overlap when the arms are open so that their radially outer surfaces define an inner support surface on which a filled casing rests.

According to another aspect of the present invention, there is provided a method of crimping an elongate filled sausage casing, said method comprising the steps of,
supporting said elongate filled casing at least two positions along its length,
crimping said filled casing at said at least two positions at substantially the same time, and
simultaneously moving the said at least positions towards each other as the crimping takes place so that the length of the filled casing between said at least two positions is shortened compared to its original length.

Preferably, the method includes the steps of,
supporting the elongate casing along a circumferential path, and moving the supported positions radially inwards from said path as the crimping operations occur.

Preferably also, the method includes the step of minimising lateral movement of the filled casing during the crimping operation.

These and other aspects of the present invention will become apparent from the following description taken in combination with the accompanying drawings in which:-
Figures 2 and 2B show a crimping device according to a first embodiment of the present invention in the open and closed positions respectively;
Figure 3 is a diagrammatic view of how a part of a sausage link is formed using the apparatus shown in Figures 2A and 2B; and
Figures 4A and 4B are similar to Figures 2A and 2B and depict an alternative embodiment of crimping device in accordance with the present invention.

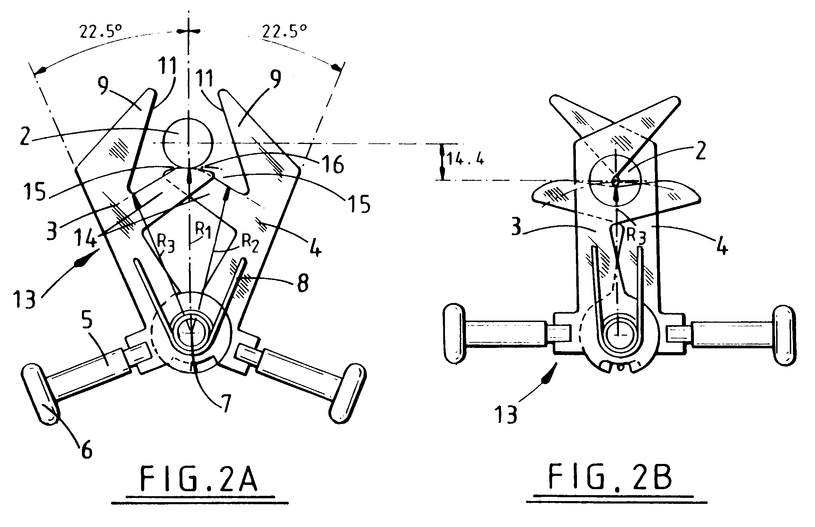

Figures 2A and 2B show a crimping device suitable for use with otherwise conventional sausage link formation apparatus of the type described, for example, in EP-0139333. The crimping device of Figure 2a comprises a very similar structure to that of the conventional crimping device described with reference to Figure 1 (with like parts being identified by like reference numerals) having a pair of crimping arms 3, 4 rotatably coupled by way of a spring 8 about an axis 7. The crimping device of Figure 2 significantly differs from that shown in Figure 1 in that the radially inner fingers 10 of the crimping arms are arranged at an angle to the horizontal, with the outer surface of inner fingers 10 having a straight portion 15 continuing into a curved portion 16 which in the open position of arms shown in Figure 2A supports the filled casing at a first radial distance, R₁, from axis 7. It will be seen that curved positions 16 overlap to form a double inner support surface 16 on which the filled casing rests. The arms and fingers are arranged so that when the arms are in the open position (shown in Figure 2a) the filled casing is supported at a first radius of curvature R₁ from axis 7 (with respect to the circular path along which the crimping devices and filled casing move) substantially identical to that of the conventional device as shown in Figure 1a. All points on surface 15, 16 are the same as or less than the first radius of curvature R₁ shown in Figure 2A.

Therefore, upon actuation of the cam followers 6, the arms 3, 4 are rotated towards each other about the axis 7 causing both sets of fingers to overlap. The radially inner fingers 10 overlap, moving the support surfaces 15, 16, i.e. the region of overlap between the upper surfaces, in a radially inward direction because the radius of curvatures R₂, R₃ of points on the surface 15 from axis 7 is less than the radius of curvature R₁ of points on surface 16 from axis 7. The extent of this radially inward movement is apparent from Figure 2b which shows the crimping device in the fully closed position supporting the crimped ends at radius of curvature R₃. The radius of curvature R₃ corresponds to the distance of surface 15 from axis 7 near the apex of the arms (Figure 2B). In contrast, Figure 1b shows that with the conventional crimping device the support surface moves radially outwardly when the arms are closed, leaving the position of the filled casing substantially unchanged but the support surface can only compress the filled casing by stretching the casing which, as mentioned above can result in casing rupture.

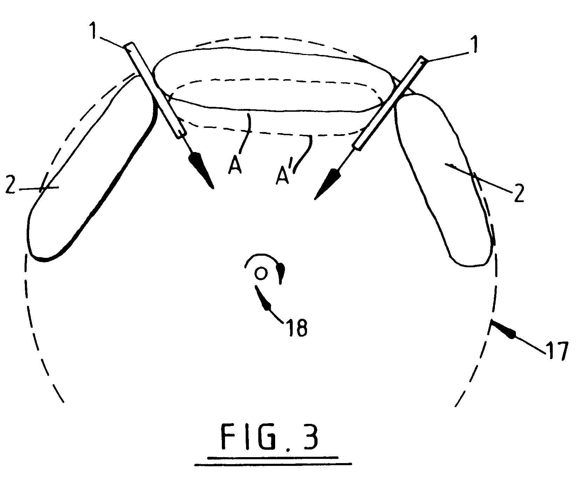

The effect of the radially inward movement of the support surface 15, 16 on the elongate filled casing is best illustrated with reference to Figure 3 which shows how a sausage link is formed by crimping devices of the type described with reference to Figures 2A and 2B.

As described previously, the crimping devices are spaced about a circular path 17 and carry the elongate filled casing around this path 17 as they are rotated about an axis 18. The crimping devices are operated by means of a cam (not shown in the Figures) which acts on the cam followers 6 so as to actuate adjacent crimping means substantially simultaneously. Considering the two crimping means 1 shown in Figure 3, as the respective crimping arms 3, 4 close about spaced portions of the filled casing 2, the respective casing support surfaces are displaced in a radially inward direction as described above. This displacement has the effect of crimping the casing 2 and the enclosed food emulsion, with the sausage portion formed during crimping moving from position A to position A', shown dashed in Figure 3. This means that the crimped sausage is shorter than the corresponding crimped but supported sausage casing. Therefore, in contrast to apparatus incorporating the crimping means of Figure 1, the crimping means of Figure 2 does not excessively stretch the casing about the forming shoulders as the casing is forced inwardly by the crimping surfaces.

In order that the support surfaces 15, 16 move inwardly as the arms are closed, the outer surface 15 of each of the inner fingers 14 (except for the regions providing the support surface when the arms are open) should lie substantially within a circle centred on the rotation axis 7 of the arms and passing through the support surface 16, when the arms are open.

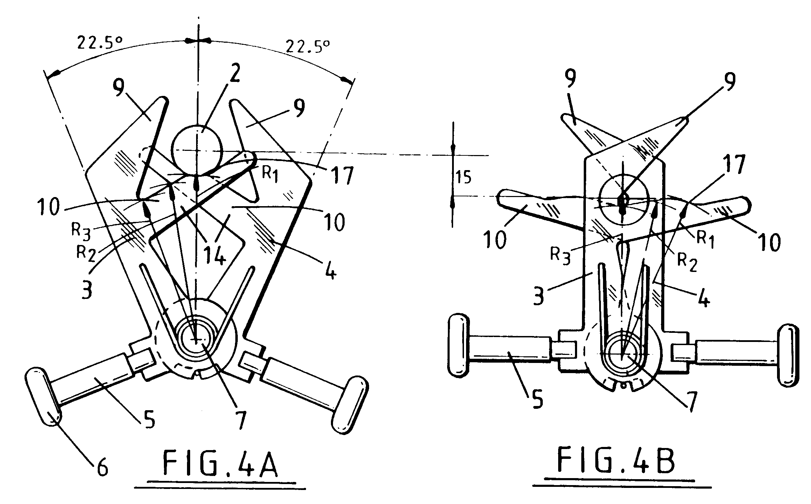

Figures 4a and 4b show a modification to the crimping device of Figure 2. In this case the radially inner fingers 10 are lengthening so that each surface 16 is shaped to form a support curve in which the filled casing rests. Overlapping the support curves effectively cradles the filled casing 2. This arrangement has the advantage in that it substantially prevents lateral movement of the filled casing which may otherwise cause the casing to move or fall off the support surface 17 and which would give rise to a non-uniform crimping action. It will be appreciated that other forms of lateral support may be provided, for example a pair of vertically extending spaced apart supports. As with the first embodiment, the initial radius of curvature from axis 7 is greater than the radius curvature at a point along surface of the arm (R2) and the radius of curvature (R₃) near the apex. Thus as arms 3, 4 close the support surface 17 moves radially inwards so that the sausage being formed by crimping moves radially inwards and shortens so that the casing is not stretched enough by the crimping as the shoulders are formed so to prevent casing rupture.

The present invention is not limited to the embodiment described above and it will be appreciated by the skilled person that various modifications may be made. For example, the invention encompasses using the crimping devices of Figure 1 with additional mechanically coupled means for moving the crimping device radially inwardly as the crimping surfaces are brought together. In addition, the present invention may be employed on linear production lines with means being provided for moving adjacent crimping devices closer together as crimping is performed.

The support surface profile can be such that it has a portion with a radius of curvature less than the initial radius of curvature and a portion greater than the initial radius of curvature, the crimping occurring as the portion with the smaller radius of curvature moves from the open to the closed position. The shape and position of the upper arms in each crimping device is such as to facilitate centring of the sausage during crimping without causing stretching of the casing sufficient to cause rupture.

## Claims

1. Apparatus for crimping an elongate filled sausages casing, the apparatus comprising;
at least two spaced apart crimping devices (1), each crimping device (1) having a plurality of crimping surfaces (11, 15, 16) which in a first position define a passageway through each of the crimping devices (1) for receiving and supporting said filled casing; and
actuation means (6) coupled to each of said crimping devices (1) for substantially simultaneously actuating selected crimping devices (1) to close two adjacent ones of the passageways about said filled casing to form a pair of adjacent crimps defining a sausage link between said pair of crimps,
characterised in that the actuation means (6) is arranged to move said two passageways closer together as said passageways are closed.

2. Apparatus for crimping an elongate filled sausage casing, the apparatus comprising;
means defining a substantially circular path (17) along which a filled sausage casing is arranged to travel;
a plurality of crimping devices (1) arranged at intervals around said circular path (17), each crimping device (1) having a plurality of crimping surfaces (11, 15, 16) which in a first position define a passageway through the crimping device (1) for receiving and supporting said a filled casing; and
actuation means (6) coupled to each of said crimping devices (1) for substantially simultaneously actuating said crimping devices (1) to close at least two adjacent passageways about said received filled casing to form a pair of adjacent crimps,
characterised in that the actuation means (6) is also arranged to displace the said passageways of said at least two adjacent crimping devices in a radially inward direction whereby as the sausage casing is being crimped it is shortened axially from its originally supported length.

3. Apparatus as claimed in claim 1 or 2, wherein each crimping device (1) is provided by a pair of crimping arms (3, 4) coupled for rotation about a common axis of rotation (7) in a scissor-like arrangement.

4. Apparatus as claimed in claim 3, wherein each arm (3, 4) is provided at its radially outer end with a pair of fingers (9, 10) which substantially define a V-shape, the two fingers (9, 10) being arranged to clamp a filled casing therebetween as the arms (3, 4) are closed.

5. Apparatus as claimed in claim 4, wherein the radially innermost fingers (10) of the two arms (3, 4) partially overlap when the arms (3, 4) are open so that their radially outer surfaces define (15) an inner support surface in which a filled casing rests.

6. A method of crimping an elongate filled sausage casing, said method comprising the steps of:
supporting said elongate filled casing at at least two positions along its length; and
crimping said filled casing at said at least two positions at substantially the same time,
characterised by the step of simultaneously moving the said at least two positions towards each other as the crimping takes place so that the length of the filled casing between said at least two positions is shortened compared to its original length.

7. A method as claimed in claim 6, wherein the method includes the steps of supporting the elongate casing along a circumferential path, and moving the supported positions radially inwards from said path as the crimping operation occurs.

8. A method as claimed in claim 6 or 7, wherein the method includes the step of minimising lateral movement of the filled casing during the crimping operation.

## Patentansprüche

1. Vorrichtung zum Zusammenpressen einer länglichen gefüllten Würstchenumhüllung, wobei die Vorrichtung folgendes umfaßt:
mindestens zwei beabstandete Zusammenpreßvorrichtungen (1), wobei jede Zusammenpreßvorrichtung (1) eine Mehrzahl von Zusammenpreßoberflächen (11, 15, 16) aufweist, welche in einer ersten Position einen Durchgang durch jede der Zusammenpreßvorrichtungen (1) zur Aufnahme und zum Halten der gefüllten Umhüllung ausbilden; und
Betätigungsmittel (6), die mit jeder der Zusammenoreßvorrichtungen (1) verbunden sind, um ausgewählte Zusammenpreßvorrichtungen (1) im wesentlichen gleichzeitig zu betätigen, um zwei benachbarte der Durchgänge um die gefüllte Umhüllung zu schließen, um ein Paar benachbarter zusammengepreßter Bereiche zu bilden, welche ein Würstchenelement zwischen dem Paar zusammengepreßter Bereiche ausbilden,
dadurch gekennzeichnet, daß das Betätigungsmittel (6) angeordnet ist, um die beiden Durchgänge bei Schließung der Durchgänge enger zusammen zu bewegen.

2. Vorrichtung zum Zusammenpressen einer länglichen gefüllten Würstchenumhüllung, wobei die Vorrichtung folgendes umfaßt:
Mittel, die einen im wesentlichen kreisförmigen Weg (17) ausbilden, wobei eine gefüllte Würstchenumhüllung so angeordnet ist, daß sie sich entlang des Weges bewegt;
eine Mehrzahl an Zusammenpreßvorrichtungen (1), welche in Intervallen um den kreisförmigen Weg (17) angeordnet sind, wobei jede Zusammenpreßvorrichtung (1) eine Mehrzahl an Zusammenpreßoberflächen (11, 15, 16) aufweist, welche in einer ersten Position einen Durchgang durch die Zusammenpreßvorrichtung (1) zur Aufnahme und zum Halten der gefüllten Umhüllung ausbilden; und
Betätigungsmittel (6), die mit jeder der Zusammenpreßvorrichtungen (1) verbunden sind, um die Zusammenpreßvorrichtungen (1) im wesentlichen gleichzeitig zu betätigen, um mindestens zwei benachbarte Durchgänge um die aufgenommene Umhüllung zu schließen, um ein Paar benachbarter zusammengepreßter Bereiche zu bilden,
dadurch gekennzeichnet, daß das Betätigungsmittel (6) ebenso angeordnet ist, um die beiden Durchgänge der mindestens zwei benachbarten Zusammenpreßvorrichtungen (1) in einer radial einwärts gerichteten Richtung zu versetzen, wodurch, wenn die Würstchenumhüllung zusammengepreßt wird, diese axial von ihrer ursprünglich gehaltenen Länge gekürzt wird.

3. Vorrichtung gemäß Anspruch 1 oder 2, bei der jede Zusammenpreßvorrichtung (1) durch ein Paar Zusammenpreßarme (3, 4) in einer Verbindung zur Drehung um eine gemeinsame Drehachse (7) in scherenartiger Anordnung zur Verfügung gestellt ist.

4. Vorrichtung gemäß Anspruch 3, bei der jeder Arm (3, 4) an seinem radial äußeren Ende mit einem Paar Fingern (9, 10) versehen ist, welche im wesentlichen eine V-Form ausbilden, wobei die beiden Finger (9, 10) angeordnet sind, um eine gefüllte Umhüllung dazwischen zu klemmen, wenn die Arme (3, 4) geschlossen sind.

5. Vorrichtung gemäß Anspruch 4, bei der die radial innersten Finger (10) der beiden Arme (3, 4) teilweise überlappen, wenn die (3, 4) Arme offen sind, so daß ihre radial äußeren Oberflächen eine innere Halteoberfläche ausbilden (15), worin eine gefüllte Umhüllung ruht.

6. Vorrichtung zum Zusammenpressen einer länglichen gefüllten Würstchenumhüllung, wobei das Verfahren folgende Schritte umfaßt:
Halten der länglichen gefüllten Umhüllung an mindestens zwei Positionen entlang ihrer Länge; und
Zusammenpressen der gefüllten Umhüllung an den mindestens zwei Positionen im wesentlichen zur selben Zeit,
gekennzeichnet durch den Schritt der gleichzeitigen Bewegung der mindestens zwei Positionen in Richtung aufeinander, wenn das Zusammenpressen erfolgt, so daß die Länge der gefüllten Umhüllung zwischen den mindestens zwei Positionen im Vergleich zu ihrer ursprünglichen Länge gekürzt wird.

7. Verfahren gemäß Anspruch 6, bei dem das Verfahren den Schritt des Haltens der länglichen Umhüllung entlang eines Umfangswegs und Bewegung der gehaltenen Positionen radial einwärts von dem Weg bei Ausführung des Zusammenpreßvorgangs umfaßt.

8. Verfahren gemäß Anspruch 6 oder 7, wobei das Verfahren den Schritt der Minimierung einer lateralen Bewegung der gefüllten Umhüllung während des Zusammenpreßvorgangs umfaßt.

## Revendications

1. Appareil pour étrangler en portions une enveloppe de saucisse garnie allongée, l'appareil comprenant :
au moins deux dispositifs d'étranglement mutuellement espacés (1), chaque dispositif d'étranglement (1) ayant une pluralité de surfaces d'étranglement (11, 15,16) qui définissent, dans une première position, un passage à travers chacun des dispositifs d'étranglement (1) de manière à recevoir et supporter ladite enveloppe garnie ; et
des moyens de manoeuvre (6) reliés à chacun des dits dispositifs d'étranglement (1) pour actionner sensiblement simultanément des dispositifs d'étranglement choisis (1) afin de fermer deux passages adjacents parmi les passages, autour de ladite enveloppe garnie, de manière à former deux étranglements adjacents qui définissent une portion liée de saucisse entre lesdits deux étranglements ;
caractérisé en ce que les moyens de manoeuvre (6) sont agencés de manière à rapprocher lesdits deux passages l'un de l'autre lors de la fermeture desdits passages.

2. Appareil pour étrangler en portions une enveloppe de saucisse garnie allongée, l'appareil comprenant :
des moyens de définition d'un chemin sensiblement circulaire (17) le long duquel une enveloppe de saucisse garnie est disposée en déplacement ;
une pluralité de dispositifs d'étranglement (1) agencés à intervalles autour dudit chemin circulaire (17), chaque dispositif d'étranglement (1) ayant une pluralité de surfaces d'étranglement (11,15,16) qui définissent, dans une première position, un passage à travers le dispositif d'étranglement (1) pour recevoir et supporter ladite enveloppe garnie ; et
des moyens de manoeuvre (6) reliés à chacun desdits dispositifs d'étranglement (1) pour actionner sensiblement simultanément lesdits dispositifs d'étranglement (1) afin de fermer au moins deux passages adjacents autour de ladite enveloppe garnie reçue, de manière à former deux étranglements adjacents ;
caractérisé en ce que les moyens de manoeuvre (6) sont également prévus pour déplacer lesdits passages desdits au moins deux dispositifs d'étranglement adjacents dans une direction radialement vers l'intérieur de sorte que l'enveloppe de saucisse, pendant son étranglement, est raccourcie axialement à partir de sa longueur initialement supportée.

3. Appareil selon la revendication 1 ou 2, dans lequel chaque dispositif d'étranglement (1) comporte deux bras d'étranglement (3,4) couplés pour rotation autour d'un axe de rotation commun (7) à la façon de ciseaux.

4. Appareil selon la revendication 3, dans lequel chaque bras (3,4) comporte, à son extrémité radialement extérieure, deux doigts (9,10) qui définissent sensiblement une configuration en V, les deux doigts (9, 10) étant agencés de manière à pincer entre eux une enveloppe garnie lorsque les bras (3,4) sont fermes.

5. Appareil selon la revendication 4, dans lequel les doigts radialement les plus intérieurs (10) des deux bras (3,4) se chevauchent partiellement lorsque les bras (3,4) sont ouverts, de sorte que leurs surfaces radialement extérieures (15) définissent une surface de support intérieure dans laquelle repose une enveloppe garnie.

6. Procédé d'étranglement en portions d'une enveloppe de saucisse garnie allongée, ledit procédé comprenant les étapes de :
support de ladite enveloppe garnie allongée à au moins deux positions sur sa longueur ; et
étranglement de ladite enveloppe garnie, aux dites au moins deux positions, sensiblement en même temps ;
caractérisé par l'étape de déplacement simultané desdites au moins deux positions l'une vers l'autre lorsque l'étranglement a lieu, de sorte que la longueur de l'enveloppe garnie entre lesdites au moins deux positions est raccourcie comparativement à sa longueur initiale.

7. Procédé selon la revendication 6, ledit procédé comprenant les étapes de support de l'enveloppe allongée le long d'un chemin circonférentiel, et de déplacement des positions supportées radialement vers l'intérieur à partir dudit chemin lorsque l'opération d'étranglement a lieu.

8. Procédé selon la revendication 6 ou 7, dans lequel le procédé comprend l'étape de minimisation du mouvement latéral de l'enveloppe garnie, pendant l'opération d'étranglement.
